# EUROPEAN PATENT APPLICATION

(11) **EP 1 304 519 A2**
(43) Date of publication of application: **23.04.2003**
(21) Application number: 02023223.7
(22) Date of filing: 16.10.2002
(51) Int. Cl.: F16L 11/118

(54) **Process for making a fluid-impermeable layer, and an impermeable hose**

(30) Priority: 19.10.2001 JP 2001321351
(71) Applicant: Tokai Rubber Industries, Ltd., Komaki-shi, Aichi-ken, 485-8550 (JP)
(72) Inventor: Hibino, Motoshige, Tokai Rubber Industries, Ltd., Komaki-shi, Aichi-ken 485-8550 (JP); Katayama, Kazutaka, Tokai Rubber Industries, Ltd., Komaki-shi, Aichi-ken 485-8550 (JP)
(74) Representative: Kuhnen & Wacker

(57) **Abstract**

A process for making a fluid-impermeable layer in a hose having one or more resin layers, and/or one or more rubber layers, and/or one or more thermoplastic elastomer layers, in which a metal plating layer as a fluid-impermeable layer is formed by wet plating on at least one of its resin, rubber and thermoplastic elastomer layers. An impermeable hose having a fluid-impermeable layer made by that process. The hose shows a high level of fluid impermeability, and is also excellent in flexibility, since the metal plating layer can be formed with a very small and uniform thickness without having any pinhole.

## Description

### BACKGROUND OF THE INVENTION

### Field of the Invention:

This invention relates to a process for making a fluid-impermeable layer and to an impermeable hose. More particularly, this invention relates to a process for making a fluid-impermeable layer by wet plating on one or more layers of a hose having one or more resin layers, and/or one or more rubber layers, and/or one or more thermoplastic elastomer layers. This invention also relates to an impermeable hose having a fluid-impermeable layer made by such a process.

In this invention, wet plating means plating for forming a film by dipping in a solution containing a film-forming substance. The mere term "plating" will hereinafter mean wet plating.

### Description of the Related Art:

A conventional rubber hose used for conveying fuel in a motor vehicle, such as a hose made of NBR-PVC (a blend of acrylonitrile butadiene rubber and polyvinyl chloride), is satisfactory in vibration absorbability and ease of assembly. It cannot, however, cope satisfactorily with the recent requirements for the high impermeability of a hose, for example, for conveying fuel or a refrigerant in a motor vehicle.

There has recently been proposed for environmental protection a hose formed from a resinous material having higher properties as a fuel or refrigerant barrier than rubber. Such a hose has a bent or corrugated portion to ensure vibration absorbability and ease of assembly.

It is, however, expected that the regulations concerning fuel permeation will be further reinforced in the future. It is also necessary to provide a hose that can be used with a highly permeable fluid, such as a carbon dioxide refrigerant, or hydrogen gas used for a fuel cell. It is, therefore, necessary to consider as a further measure the incorporation of a thin metal layer expected to have a very high fluid impermeability in a hose as a barrier layer.

A method relying upon a film formed by metal vapor deposition, or a method relying upon a metallic foil is known as a method of making a thin metal layer to be incorporated in a fluid conveying hose as a barrier layer. A method in which a metallic foil is shaped into a tubular form and incorporated into a hose, or a method in which a laminated sheet in tape form is formed from a metallic foil and incorporated into a hose by spiral winding or longitudinal lapping is known as a method relying upon a metallic foil.

A film formed by metal vapor deposition cannot, however, be said to be very high in fluid impermeability, since it is microscopically a discontinuous film.

As regards a metallic foil, it is not easy to form a foil having a very small and uniform thickness without making any pinhole. It is, therefore, usual to form a metallic foil with a thickness not smaller than a certain level (generally, larger than about 150 µm). As a result, it is feared that a hose may lack in flexibility. There is also an economical problem if a hose is made of a metal that is expensive, though it may be excellent in physical properties, such as nickel. Moreover, in the case of a hose having a bent or corrugated portion, residual stress remaining in a metallic foil as a result of its shaping into such a form is likely to lower the vibration durability of any hose that is liable to frequent deformation due to vibration, like a hose for a motor vehicle.

### SUMMARY OF THE INVENTION

It is an object of this invention to form a metal layer for incorporation in a hose as a barrier layer with a very small and uniform thickness without making any pinhole. It is another object of this invention to maintain the fluid impermeability of such a metal layer at a very high level. It is still another object of this invention to enable a hose having a bent or corrugated portion to be free from any problem caused by residual stress produced in a metal layer during its shaping.

According to a first aspect of this invention, there is provided a process for making a fluid-impermeable layer in a hose, comprising forming a metal plating layer as a fluid-impermeable layer by wet plating on one or more layers of a hose composed of one or more resin layers, and/or one or more rubber layers, and/or one or more thermoplastic elastomer layers.

According to the first aspect, a metal plating layer formed as a fluid-impermeable layer by wet plating can be expected to be of very high fluid impermeability without having any film discontinuity, unlike a layer formed by metal vapor deposition. Moreover, it is easy to form a film of very small and uniform thickness without making any pinhole, unlike the case in which a mechanically shaped metallic foil is used. As it is possible to form a thin and uniform metal layer, it is easy to ensure the flexibility of a hose. Therefore, it becomes possible to employ at a relatively low cost any metal, such as nickel, that is excellent in physical properties, but expensive, since the amount in which it is used can be reduced.

The inventors of this invention have found that a metal plating layer formed by wet plating is comparable to a mechanically shaped metal film in durability to deformation due to vibration, etc. It is, however, feared that a metallic foil in a hose having a bent or corrugated portion may have its vibration durability lowered by the residual stress produced during its shaping. Wet plating makes it easy to form a metal plating layer of small and uniform thickness after shaping to form a bent or corrugated portion. Therefore, it is possible to form an impermeable metal layer of high durability that is free from any residual stress caused by such shaping.

The inventors have not yet been aware of any prior art concerning the application of the wet plating technique for a resin, rubber, or thermoplastic elastomer layer to a hose for conveying a fluid. The inventors have not yet been aware of any prior art concerning metal plating intended for forming a fluid barrier layer, either.

According to a second aspect of this invention, the hose according to the first aspect as described above has a bent or corrugated portion along at least a part thereof. The process for making a fluid-impermeable layer according to the first aspect is particularly effective for a hose having a bent or corrugated portion as according to the second aspect.

According to a third aspect of this invention, the resin layer and/or rubber layer and/or thermoplastic elastomer layer on which the metal plating layer is to be formed according to the first or second aspect as described is formed from a material of the plating grade, or a conductive material, as prepared from the corresponding resin, rubber or thermoplastic elastomer.

The "material of the plating grade" is a material containing a dispersion of a component soluble in an etching solution. During the step of chemical etching preceding wet plating, cavities are formed in the material of the plating grade by its component soluble in the etching solution and produce an anchor effect for a plating metal. The "conductive material" is an originally conductive material, or a material having its conductivity given by carbon black, carbon fiber, graphite, metal powder, etc. added to it.

According to the third aspect as described, the metal plating layer adheres very closely to the resin layer and/or rubber layer and/or thermoplastic elastomer layer of the material of the plating grade, or conductive material.

According to a fourth aspect of this invention, the wet plating according to the first to third aspects as described above is electroless (or chemical) plating and/or electroplating. In other words, either electroless plating or electroplating is carried out, or both of them are carried out.

Electroless plating and electroplating are preferably employed for wet plating as according to the fourth aspect. If the resin layer and/or rubber layer and/or thermoplastic elastomer layer on which a metal plating layer is to be formed is of a material of the plating grade, it is particularly preferable to form a metal conductor layer by electroless plating and carry out electroplating on it. If the resin layer and/or rubber layer and/or thermoplastic elastomer layer on which a metal plating layer is to be formed is of a conductive material, it is particularly preferable to carry out electroplating.

According to a fifth aspect of this invention, there is provided an impermeable hose comprising one or more resin layers and/or one or more rubber layers and/or one or more thermoplastic elastomer layers, wherein a metal plating layer is formed by wet plating as a fluid-impermeable layer on at least one of the resin layers and/or rubber layers and/or thermoplastic elastomer layers.

The impermeable hose according to the fifth aspect can be expected to have a very high fluid impermeability, since it has a fluid-impermeable layer that is a metal plating layer formed by wet plating. It is easy to ensure the flexibility of the hose, since its fluid-impermeable layer can be formed with a very small and uniform thickness without having any pinhole. The metal plating layer formed by wet plating is comparable in durability to any mechanically processed metal film, and can, moreover, be formed with a small and uniform thickness after shaping for a bent or corrugated portion.

According to a sixth aspect of this invention, the resin layer or layers according to the fifth aspect as described above are formed from PE (polyethylene), PP (polypropylene), PA6 (polyamide 6), PA11 (polyamide 11), PA12 (polyamide 12), PET (polyethylene terephthalate), PBT (polybutylene terephthalate), PBN (polybutylene naphthalate), PVDF (polyvinylidene fluoride), ETFE (ethylene-tetrafluoroethylene copolymer), PTFE (polytetrafluoroethylene), PPS (polyphenylene sulfide), PEEK (polyether ether ketone), EVOH (ethylene-vinyl alcohol copolymer), ABS (acrylonitrile-butadiene-styrene), EVA (ethylene-vinyl alcohol) or PI (polyimide), or a material of the plating grade, or a conductive material, as prepared from any such resin.

The materials listed as the sixth aspect are preferred examples of the materials forming any resin layer in the impermeable hose. PP, PE, PA11, PA12, PET, PBT, PBN or ETFE is, among others, preferred from the standpoints of flexibility and elongation as the material forming the resin layer on which a metal plating layer is to be formed.

According to a seventh aspect of this invention, the rubber layer or layers according to the fifth or sixth aspect as described above are formed from NR (natural rubber), IR (isoprene rubber), BR (butadiene rubber), SBR (styrenebutadiene rubber), IIR (butyl rubber), EPM (ethylenepropylene rubber), EPDM (ethylene-propylene-diene rubber), CR (chloroprene rubber), CSM (chlorosulfonated polyethylene rubber), CPE (chlorinated polyethylene rubber), CHR/CHC (epichlorohydrin rubber), NBR (nitrile rubber), ACM/ANM (acrylic rubber), U (urethane rubber), T (polysulfide rubber), Q (silicone rubber), NBR-PVC (blend of nitrile rubber and polyvinyl chloride), H-NBR (hydrogenated nitrile rubber) or FKM (fluororubber), or a material of the plating grade, or a conductive material, as prepared from any such rubber.

The materials listed as the seventh aspect are preferred examples of the materials forming any rubber layer in the impermeable hose. EPM, EPDM, CSM, CPE, CHC, ACM, Q or FKM is, among others, preferred from the standpoints of corrosion resistance to a plating solution and weatherability as the material forming the rubber layer on which a metal plating layer is to be formed.

According to an eighth aspect of this invention, the thermoplastic elastomer layer or layers according to any of the fifth to seventh aspects as described above are formed from a styrene type (TPS), olefin type (TPO), ester type (TPEE), urethane type (TPU) or amide type (TPAE) thermoplastic elastomer, or a material of the plating grade, or a conductive material, as prepared from any such elastomer.

The materials listed as the eighth aspect are preferred examples of the materials forming any thermoplastic elastomer layer in the impermeable hose. TPO, TPEE, TPU or TPAE is, among others, preferred from the standpoint of heat resistance as the material forming the thermoplastic elastomer layer on which a metal plating layer is to be formed.

According to a ninth aspect of this invention, the metal plating layer according to any of the fifth to eighth aspects as described above is formed by a single or plural metal plating layers selected from among a plating layer of Ni (nickel), Cu (copper), Cr (chromium), Zn (zinc), Au (gold), Ag (silver), Al (aluminum), Sn (tin), Co (cobalt), Pd (palladium), Pb (lead), Pt (platinum), Cd (cadmium) or Rh (rhodium), or an alloy plating layer based on any such metal and a composite plating layer.

The metal plating layers listed as the ninth aspect are preferred examples of any metal plating layer in the impermeable hose from the standpoints including cost, the property of being able to form a thin film without having any pinhole, durability against vibration fatigue as a metal film, and corrosion resistance to water or to fluid to be conveyed, etc.

According to a tenth aspect of this invention, the metal plating layer according to the ninth aspect as described above includes at least a nickel plating layer. The metal plating layer including at least a nickel plating layer is, among others, preferred from the standpoints of durability against vibration fatigue, corrosion resistance, etc. as according to the tenth aspect. Although Ni is expensive, the formation of the metal plating layer with a very small and uniform thickness enables a relative reduction of cost.

According to an eleventh aspect of this invention, the impermeable hose according to any of the fifth to tenth aspects as described above is a fluid conveying hose, or a hose for liquid or gaseous fuel, or a refrigerant for a motor vehicle. The impermeable hose according to any of the fifth to tenth aspects is particularly preferable for use as the hose according to the eleventh aspect, since it has a very high fluid impermeability, and is also easy to provide with flexibility and durability against vibration fatigue.

The above and other advantages of the invention will become more apparent from the following description and the accompanying drawing.

### BRIEF DESCRIPTION OF THE DRAWING

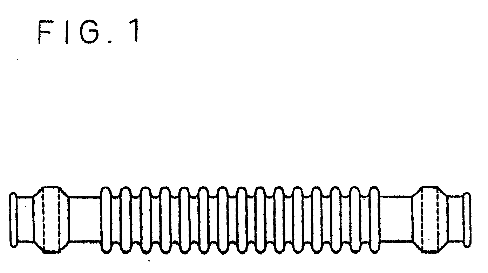

FIG. 1 shows the shape of an impermeable hose embodying this invention.

### DETAILED DESCRIPTION OF THE INVENTION

### [Impermeable Hoses]

The impermeable hose of this invention is a hose having one or more resin layers and/or one or more rubber layers and/or one or more thermoplastic elastomer layers. At least one of the resin, rubber and thermoplastic elastomer layers has a metal plating layer formed thereon by wet plating. The impermeable hose may further be provided with any of various hose-forming elements including a reinforcing layer formed by reinforcing fibers, as desired.

The metal plating layer is formed on any resin and/or rubber and/or thermoplastic elastomer layer forming the innermost layer of the hose, any middle layer thereof, or its outermost layer. It may be formed on the inner peripheral surface of any such resin and/or rubber and/or thermoplastic elastomer layer, or on its outer peripheral surface.

A hose of the composite layer structure formed from the hose-forming elements as shown at any of 1) to 5) below can be mentioned as a preferred example of the construction of the impermeable hose. In the composite layer structure shown at 1) to 5), the hose-forming element for the innermost layer is shown on the left side, and the hose-forming elements for the outer layers are shown in the order from left to right. Layer A means a single or plural layers of rubber and/or resin and/or thermoplastic elastomer. Layer B means a metal plating layer (impermeable layer). Layer C means a reinforcing layer.
1) Layer B/layer A;
2) Layer B/layer A/layer C/layer A;
3) Layer A/layer B;
4) Layer A/layer B/layer A;
5) Layer A/layer B/layer A/layer C/layer A.

In the examples of hose construction shown at 1) to 5) above, various combinations of layer A are possible. For example, the two or three layers A in the examples of hose construction shown at 2), 4) and 5) may be of the same single or plural layer construction, or may be of different layer construction. The rubber, resin or thermoplastic elastomer forming the two or three layers A may be of the same kind, or may be of different kinds.

In the examples of construction shown at 1) to 5) above, layer B is formed on the surface of the inner or outer rubber, resin or thermoplastic elastomer layer. Layer C may be of any known construction, but is preferably a reinforcing layer formed by the spiral winding or braiding of reinforcing yarns, such as aramid fibers, a braided wire layer formed by the spiral winding or braiding of wire, etc.

The impermeable hose is not limited in overall shape. The hose may be straight in its entirety as usual, or may be partly bent. The hose may be straight or bent, and may be corrugated along its entire length, or along a part or the greater part of its length, while it is smooth (not corrugated) along any other portion.

Such an impermeable hose can be manufactured by any known process. Its metal plating layer, which is a fluid-impermeable layer, can be formed by the method that will be described later. For the manufacture of a hose having a bent or corrugated portion, it is preferable to form a metal plating layer after bending or corrugating a hose. In such a way, the metal plating layer is not loaded with any stress.

The impermeable hose can be used for conveying various fluids (liquid or gas) without limitation. It is particularly suitable as a fluid conveying hose for a motor vehicle. It is preferable for use as, for example, a hose for liquid or gaseous fuel, or a refrigerant for a motor vehicle. More specifically, it can be used as a fuel hose for a motor vehicle that is used for liquid fuel, such as gasoline, a mixture of gasoline and alcohol, or methanol, a fuel hose for gaseous fuel, such as propane gas, hydrogen gas for a fuel cell vehicle, a refrigerant hose for chlorofluorocarbon (fleon), carbon dioxide, etc., or an air hose, as desired.

As a metal plating layer is itself of high heat resistance, it is possible to make a hose of high heat resistance by forming such a layer on the surface of a resin layer formed from a resin of high-melting point. Such a hose is suitable as, for example, a fuel, air or cooler hose in the engine compartment of a motor vehicle. According to this invention, it is easy to make a hose of large diameter and high gas barrier property that is suitable as a filler hose, or the like. A hose having a metal plating layer formed as its innermost layer makes a hose of low extractability that is suitable for conveying pure water in a hydrogen fuel cell. A hose having a metal plating layer formed as its outermost layer makes a hose of high water resistance.

### [Resin Layer/Rubber Layer/Thermoplastic Elastomer Layer]

A metal plating layer is formed on the inner or outer peripheral surface of one or more of the resin and/or rubber and/or thermoplastic elastomer layers forming the impermeable hose. As the material for the resin, rubber or thermoplastic elastomer layer forming a base for metal plating, it is particularly preferable to use a material of the plating grade, or a conductive material, as prepared therefrom.

Although the material for the resin layer forming the impermeable hose is not limited, it is possible to mention PE, PP, PA6, PA11, PA12, PET, PBT, PBN, PVDF, ETFE, PTFE, PPS, PEEK, EVOH, ABS, EVA or PI as a preferred example. PP, PE, PA11, PA12, PET, PBT, PBN or ETFE is, among others, preferred as the material for the resin layer forming a base for metal plating.

Although the material for the rubber layer forming the impermeable hose is not limited, it is possible to mention NR, IR, BR, SBR, IIR, EPM, EPDM, CR, CSM, CPE, CHR/CHC, NBR, ACM/ANM, U, T, Q, NBR-PVC, H-NBR or FKM as a preferred example. EPM, EPDM, CSM, CPE, CHC, ACM, Q or FKM is, among others, preferred as the material for the rubber layer forming a base for metal plating.

Although the material for the thermoplastic elastomer layer forming the impermeable hose is not limited, it is possible to mention a styrene, olefin, ester, urethane or amide type thermoplastic elastomer as a preferred example.

TPO, TPEE, TPU or TPAE is, among others, preferred as the material for the thermoplastic elastomer layer forming a base for metal plating.

### [Metal Plating Layer]

The metal plating layer is formed by the wet plating of the resin and/or rubber and/or thermoplastic elastomer layer. Electroless (or chemical) plating and/or electroplating can be employed for wet plating. Electroless plating is beneficial for forming a metal plating layer of uniform thickness, and electroplating is beneficial in the good mechanical properties of a plating film and the cost of treatment. If the resin and/or rubber and/or thermoplastic elastomer layer on which a metal plating layer is to be formed is of a material of the plating grade, it is particularly preferable to form a metal conductor layer by electroless plating and carry out electroplating thereon, as will be shown by examples of embodiment. If the resin and/or rubber and/or thermoplastic elastomer layer on which a metal plating layer is to be formed is of a conductive material, it is particularly preferable to carry out electroplating.

The metal plating of the resin and/or rubber and/or thermoplastic elastomer layer can be carried out by a well or publicly known resin plating method, or a similar method applied to rubber or thermoplastic elastomers. For example, it can be carried out by the following process. Cleansing, such as degreasing, is first done of the resin and/or rubber and/or thermoplastic elastomer layer forming a base for plating, if required. Then, the surface of the base is roughened by e.g. chemical etching (to form cavities having an anchor effect if the base is of a material of the plating grade) . Then, chemical plating is carried out after a reducing catalyst for plating metal deposition is adsorbed. A metal conductor layer thereby formed is used as an electrode for electroplating.

Although the kind of metal forming the metal plating layer is not limited, Ni, Cu, Cr, Zn, Au, Ag, Al, Sn, Co, Pd, Pb, Pt, Cd or Rh can be mentioned as a preferred example and Ni is, among others, preferred. It is more preferable to form as the metal plating layer a single or composite metal layer selected from among any such metal plating, or any alloy and/or composite plating based thereon. The metal plating layer may be formed in two or more portions of the composite structure of the hose, or may also be formed as a single or composite layer in one and the same portion thereof. In either event, at least one layer in the metal plating layer is preferably a Ni plating layer.

While the metal plating layer is not limited in thickness, it is possible to form a metal plating layer having a thickness of, say, 1 angstrom or slightly larger and not having any pinhole, depending upon the kind of metal. It is generally preferable to form the metal plating layer with a thickness of, say, 1 to 500 µm. For a Ni plating layer, a thickness of, say, 1 to 100 µm is particularly preferable from the standpoints of pinhole prevention, flexibility and cost.

### EMBODIMENTS

### [1: Manufacture of Resin Hoses]

Three resin hoses each having a corrugated middle portion as shown in FIG. 1 were manufactured from PA6 or ABS of the plating grade (from PA6 in Examples 1 and 2 and from ABS in Example 3). Each of these hoses had an overall length of 400 mm and its straight portion had an outside diameter of 30 mm and an inside diameter of 28 mm. Its corrugated portion had an overall length of 300 mm and a pitch of 6 mm between ridges.

### [2: Manufacture of Impermeable Hoses]

An electroless Ni plating layer having a thickness of 0.2 micron was formed on the outer peripheral surface of the resin hose according to Example 1, and a Ni electroplating layer having a thickness of 10 µm thereon, by using common methods of electroless plating and electroplating as described before.

The same electroless Ni plating and Ni electroplating layers as on the resin hose according to Example 1 were formed on the outer peripheral surface of the resin hose according to Example 2, and a resin layer of PA11 having a thickness of 50 µm was thereafter formed thereon by electrostatic coating for improving its corrosion resistance.

After the resin hose according to Example 3 had its outer peripheral surface masked with an appropriate material, an electroless Ni plating layer having a thickness of 0.2 µm and a Ni electroplating layer having a thickness of 10 µm were formed on its inner peripheral surface by the same methods as stated above. Then, ABS was removed by melting under heat to yield a thin tubular body consisting solely of the metal plating layers. Then, a resin layer of PA11 having a thickness of 50 µm was formed on the outer peripheral surface of the tubular body by electrostatic coating for improving its corrosion resistance.

### [3: Evaluation for Durability]

Each of the impermeable hoses according to the Examples described above was fixed at one end and the other end thereof was caused to make a circular vibrating motion without being twisted at a speed of 500 cycles per minute along the circumference of a circle having its center on the longitudinal axis of the hose and with a radius of 15 mm until a total of 10,000,000 times.

The impermeable hoses according to Examples 1 to 3 that had been loaded with vibration fatigue as described above, and those not loaded with any such vibration fatigue (blanks) were evaluated for fuel permeability by the SHED method.

The SHED method is carried out as now explained. A mixture of INDRAIN gasoline as test gasoline for evaluation and 10% of ethanol (INDRAIN/E10) is confined in an impermeable hose sealed tightly at both ends. After it is left to stand at 40°C for 1000 hours for stabilization, the INDRAIN/E10 that has been confined is discharged. Then, after fresh INDRAIN/E10 is confined in the impermeable hose again, it is left to stand in an environment in which a fixed temperature cycle is repeated, and the amount of its fuel permeation is measured every 24 hours. The measurement is repeated three times, and the maximum of the values obtained by those three times of measurement is taken as the amount of fuel permeation per test [(mg/test) = (mg/24 h) ] . For the tests according to these Examples, a sealing member comprising O-rings formed from FKM were used for sealing both ends of the hoses.

The results of the above evaluation (amounts of fuel permeation) are shown in Table 1 below. The hoses according to Examples 1 to 3 showed similar results of fuel permeation whether after loading with vibration fatigue or in their blank forms, and it is, thus, obvious that loading with vibration fatigue does not cause any worsening in respect of fuel permeation. It is considered that the amount of fuel permeation as measured is substantially entirely of fuel permeation from the tightened ends of the hose, and that the hoses are substantially free from any fuel permeation. For the sake of confirmation, the resin layers were removed from the impermeable hoses according to Examples 1 to 3 that had been loaded with vibration fatigue, and their metal plating layers were inspected visually, but no cracking was found in any of them.

### [4: Chromium Plating Layers]

Impermeable hoses were manufactured by changing the electroless Ni plating layer to an electroless Cr layer and the Ni electroplating layer to a Cr electroplating layer and otherwise repeating Examples 1 to 3. The impermeable hoses were evaluated for fuel permeability by the SHED method. As a result, all the hoses were substantially free from any fuel permeation, as was the case with the impermeable hoses according to Examples 1 to 3.

**[Table 1]**

| | | Amount of permeation |
|---|---|---|
| Example 1 | Before durability test (blank) | 0.38mg/test |
| | After durability test | 0.37mg/test |
| Example 2 | Before durability test (blank) | 0.41mg/test |
| | After durability test | 0.40mg/test |
| Example 3 | Before durability test (blank) | 0.39mg/test |
| | After durability test | 0.40mg/test |

While the preferred embodiments have been described, variations thereto will occur to those skilled in the art within the scope of the present inventive concepts which are delineated by the following claims.

## Claims

1. A process for making a fluid-impermeable layer in a hose, comprising forming a metal plating layer as a fluid-impermeable layer by wet plating on one or more layers of a hose composed of one or more resin layers, and/or one or more rubber layers, and/or one or more thermoplastic elastomer layers.

2. The process according to claim 1, wherein the hose has a bent or corrugated portion along at least a part thereof.

3. The process according to claim 1 or 2, wherein the resin and/or rubber and/or thermoplastic elastomer layer on which the metal plating layer is to be formed is formed from a material of the plating grade or a conductive material, as prepared from the corresponding resin, rubber or thermoplastic elastomer.

4. The process according to any one of claims 1 to 3, wherein the wet plating is carried out by electroless plating and/or electroplating.

5. An impermeable hose comprising one or more resin layers and/or one or more rubber layers and/or one or more thermoplastic elastomer layers, wherein a metal plating layer is formed by wet plating as a fluid-impermeable layer on at least one of the resin layers and/or rubber layers and/or thermoplastic elastomer layers.

6. The impermeable hose according to claim 5, wherein the resin layer or layers are formed from PE, PP, PA6, PA11, PA12, PET, PBT, PBN, PVDF, ETFE, PTFE, PPS, PEEK, EVOH, ABS, EVA or PI, or a material of a plating grade, or a conductive material, as prepared therefrom.

7. The impermeable hose according to claim 5, or claim 6 wherein the rubber layer or layers are formed from NR, IR, BR, SBR, IIR, EPM, EPDM, CR, CSM, CPE, CHR/CHC, NBR, ACM/ANM, U, T, Q, NBR-PVC, H-NBR or FKM, or a material of a plating grade, or a conductive material, as prepared therefrom.

8. The impermeable hose according to any one of claims 5 to 7, wherein the thermoplastic elastomer layer or layers are formed from a styrene, olefin, ester, urethane or amide type thermoplastic elastomer, or a material of a plating grade, or a conductive material, as prepared therefrom.

9. The impermeable hose according to any one of claims 5 to 8, wherein the metal plating layer comprises a single or plural metal plating layers selected from among a plating layer of Ni, Cu, Cr, Zn, Au, Ag, Al, Sn, Co, Pd, Pb, Pt, Cd or Rh, and an alloy or composite plating layer based on any such metal.

10. The impermeable hose according to any one of claims 5 to 9, wherein the hose is a fluid conveying hose, or a liquid or gaseous fuel, or refrigerant hose for a motor vehicle.
